# EUROPEAN PATENT APPLICATION

(11) **EP 2 230 770 A1**
(43) Date of publication of application: **22.09.2010**
(21) Application number: 09460012.9
(22) Date of filing: 16.03.2009
(51) Int. Cl.: H04B 1/38

(54) **A universal mobile phone holder, especially for mechanical vehicles, with an adaptable part adjusting the holder to the size of the mobile phone**

(71) Applicant: BURY Sp. z o.o., 39-300 Mielec (PL)
(72) Inventor: Bury, Henryk, 39-300 Mielec (PL)
(74) Representative: Kaminski, Zbigniew

(57) **Abstract**

A universal mobile phone holder, especially for mechanical vehicles, with an adaptable part adjusting the holder to the size of the mobile phone, which includes a set of holding units, each of these holding units consisting of a base (1) and side walls (2) that form one entirety with the base (1) and are approximately perpendicular to the base (1), and are provided with top hooked catches (11) and bottom curved protrusions (7) to prevent the phone from falling out; the said holder also provided with a known cradle that is permanently fixed within a mechanical vehicle, **characterised in that** particular holding units (3, 4, 5, 6) are different from one another in terms of the width A of the base (1) and the height C of the side walls (2) but the ranges of width (A) and height (C) of all holding units in the set cover the range of dimensions of all types of mobile phones available on the market.

## Description

A universal mobile phone holder, especially for mechanical vehicles, with an adaptable part adjusting the holder to the size of the mobile phone

This invention relates to a universal mobile phone holder, especially for mechanical vehicles, with an adaptable part adjusting the holder to the size of the mobile phone, which is provided with a set of several holding units and also with a known cradle that is permanently fixed within a mechanical vehicle. Each holding unit consists of a base and side walls, which form one entirety with the base and are approximately perpendicular to the base, and are provided with top catches and bottom curved protrusions to prevent the phone from falling out.

An inconvenience of known mobile phone holders, especially used in mechanical vehicles, is that the size and the shape of a holder, in particular its side walls, are strongly determined by the dimensions and the shape of a mobile phone to be inserted in the holder. Therefore, holders of different size and shape have to be used specifically for each type and model of a mobile phone. To increase versatility of a holder and its applicability to phones of various size and shape, the extendable side walls are provided so that the distance between them is adjustable; the said walls are usually mounted slideably in the base and moved inwards or outwards by means of specific mechanisms. A disadvantage of such holders is a sophisticated mechanism of extending the side walls, which results not only in higher production costs but also in lower reliability of a holder

The US patent No. US 5 697 071 describes a known mobile phone holder for various types of mobile phones, which widths differ only to a small extent. For this purpose the side walls of the holder have a form of relatively thin clamps mounted slideably in a bi-partite base and blocked in a set position by means of protrusions, which enter into notches on inner faces of both partitions of the base. The said clamps consist of two elements of different height - the shorter elements press the phone against the base. An inconvenience of this solution is a sophisticated design and a risk that the phone does not sit firmly in the holder.

The object of this invention is to provide a universal mobile phone holder, especially for a mechanical vehicle, with an adaptable part adjusting the holder to the size of the mobile phone; the said holder is provided with a set of a number of holding units, each of them adapted to accommodate various phones of dimensions within a specific range Consequently, the set of several holding units, additionally provided with replaceable inserts, enables locking any type of phone of any shape and size within a quite wide range.

The objective is achieved by a universal holder according to the invention, in which the particular holding units, that constitute the adaptable part of the holder, are different from one another in terms of the width of the base and the height of the side walls, however, the range of the widths and heights of all the holding units in the set covers the widths and thicknesses of the mobile phones available on the market.

The holding units are favourably provided with a set of replaceable inserts of various thickness and height of the horizontal protrusion. The base of each holding unit is provided with through holes, into which the replaceable inserts can be inserted from below and mounted.

The side walls of the holding units are favourably provided with cavities on their inner surface, the size of which corresponds to the dimensions of the replaceable inserts.

The inserts are made of resilient material, favourably, of rubber

The inserts favourably consist of a vertical wall inserted into the rectangular cavity in a side wall of the holding unit and of a bottom protrusion, which width and thickness are adjusted to accommodate mobile phones of various width and thickness.

The replaceable inserts are favourably provided with a hooked protrusion at the top.

The vertical wall of replaceable inserts is favourably thin and is provided with stiffening ribs in its rear part.

The adaptable part of the holder is favourably provided with an adapter that has a form of a flat thin box, inside which there is an electronic module, namely, a Bluetooth module; the said adapter is mounted in a cradle fixed to the body of a mechanical vehicle and is favourably connected with the holding unit, placed on the adapter, by means of a screw.

In its upper part the adapter is favourably provided with a notch, which is adapted to engage with the protrusion in the cradle. In its lower part the adapter is provided with a protrusion, which is adapted to enter into the element of the lower part of the cradle. In its middle part the adapter is provided with a hole, which is concentric with one of the holes in the base of the holding unit.

In its upper part the adapter is favourably provided with a transparent window, under which there is a LED that is a part of the Bluetooth module and indicates the operation of the Bluetooth module.

On its front surface the adapter is provided with an annular set of locating protrusions, which are adapted to engage with a corresponding set of protrusions on the rear surface of the holding unit.

In its lower front part the adapter is favourably provided with a multi-pin connection, whereas on the side walls it is provided with a set of sockets connected to the electronic module.

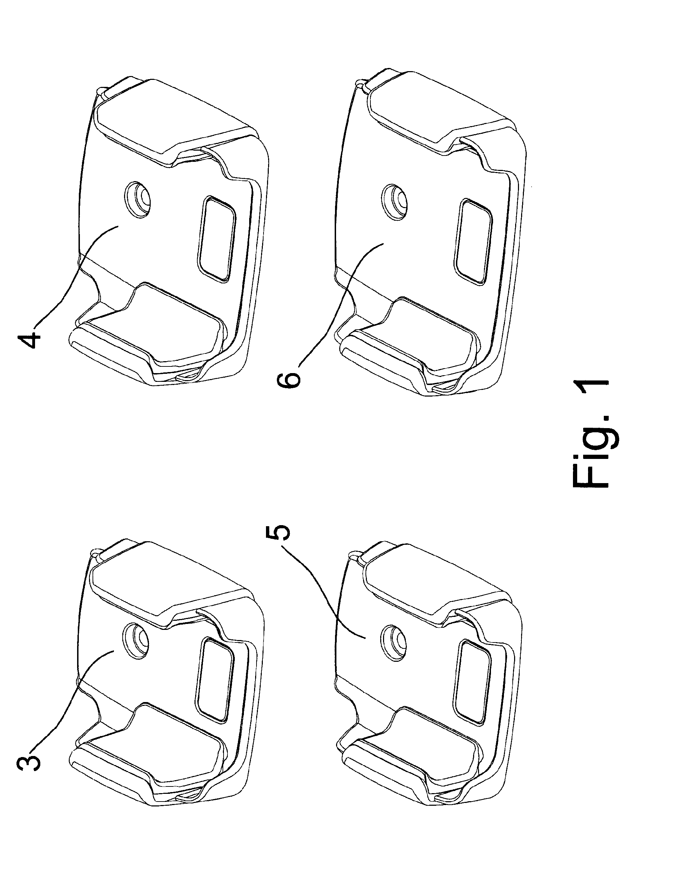

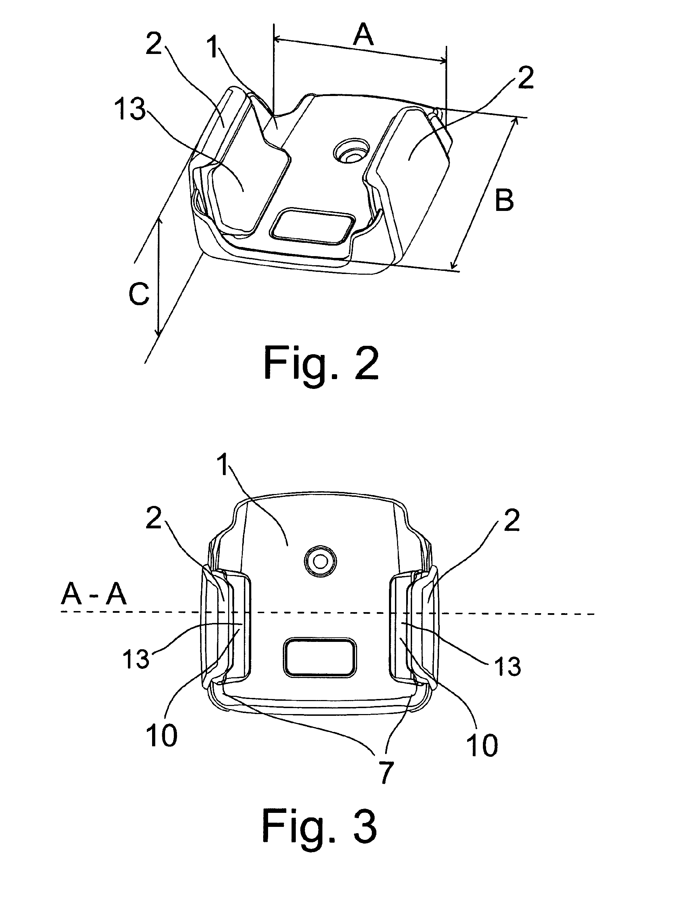

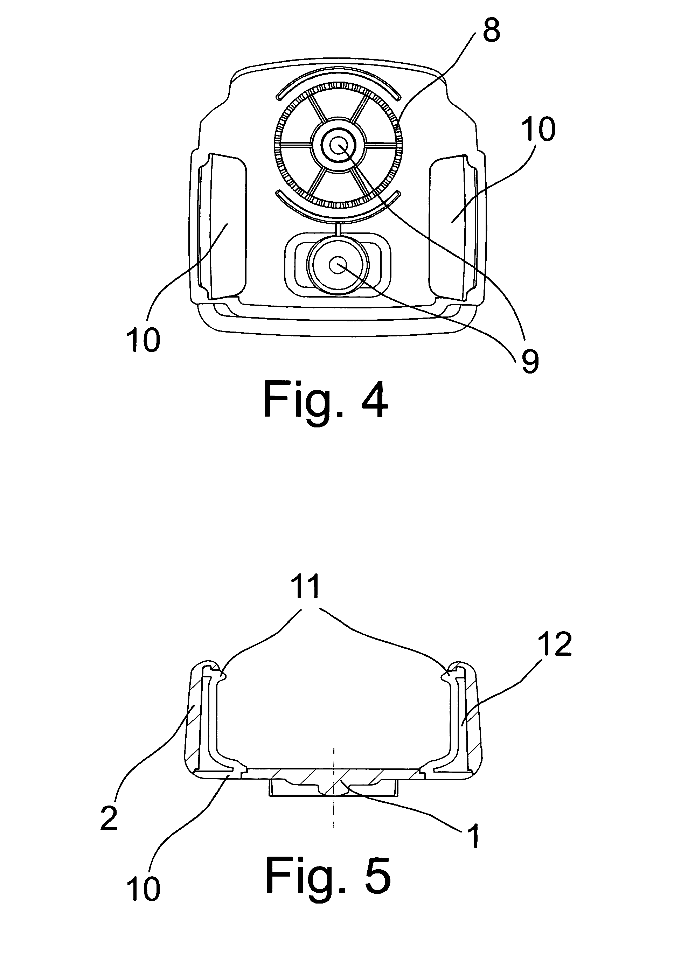

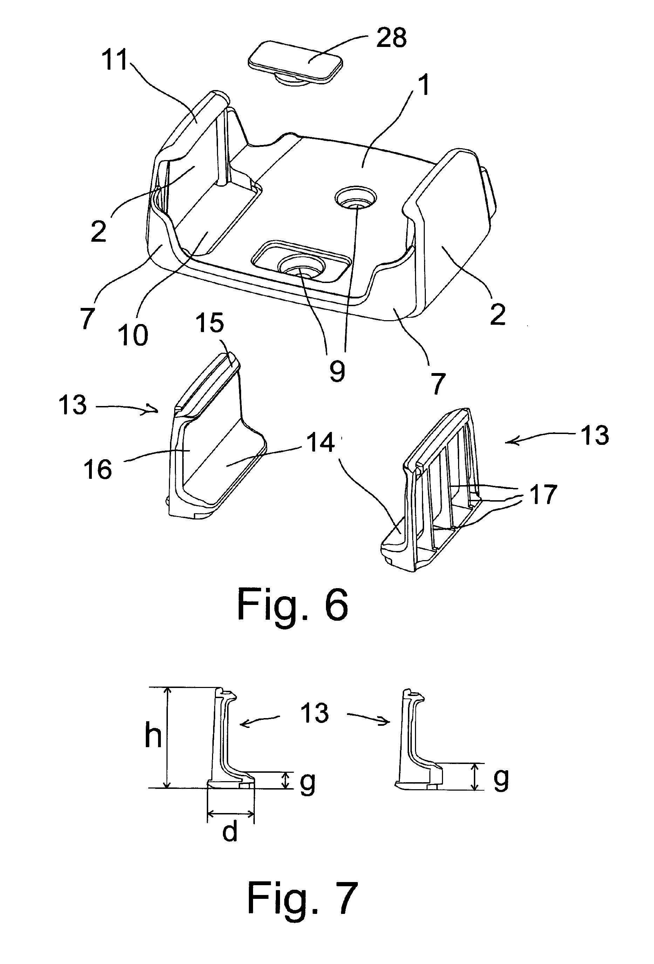

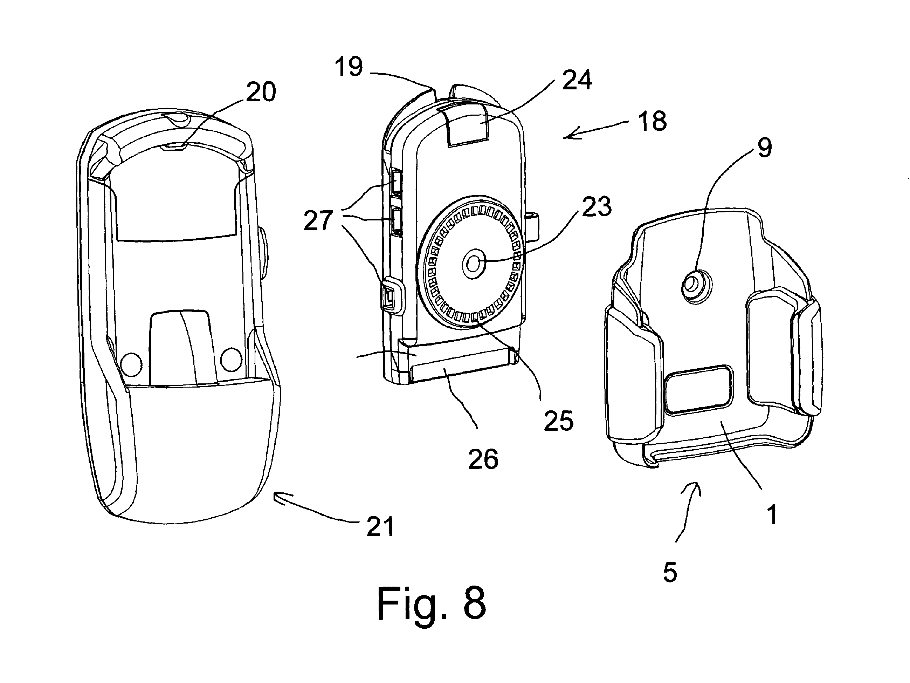

The universal mobile phone holder, especially for mechanical vehicles, according to the invention, equipped with a set of holding units, adapted to accommodate mobile phones of various dimensions, is presented, by way of the example only, on the drawings, where: Fig. 1 presents the set of four holding units, each of them corresponding to a specific range of dimensions, especially width and thickness, of a mobile phone; Fig. 2 is a perspective view of one of the holding units presented in the Fig. 1; Fig. 3 is a front view of the holding unit presented in the Fig. 2; Fig. 4 is a rear view of the said holding unit; Fig. 5 is a cross-sectional view of the said holding unit along the A-A axis visible in the Fig. 3; Fig. 6 is an exploded view of the said holding unit with the replaceable inserts outside; Fig. 7 is a cross-sectional view of a set of replaceable inserts of various thickness g and width d, which are complementary to the holding unit; Fig. 8 shows all the components of the universal mobile phone holder, namely: the cradle, the adapter and the holding unit.

The universal mobile phone holder, especially for a mechanical vehicle, according to the invention, consists of the cradle 21, as depicted in the Fig. 8, which is fixed to inner elements of the car body with an adhesive or by means of screws, and of the adaptable part that is adapted to accommodate a mobile phone of specific width and thickness; the phone is not depicted on the drawing. The adaptable part of the universal holder, according to the invention, consists of a holding unit 5, which is one of four holding units 3, 4, 5 and 6 in the set. The holding unit 5, selected appropriately to the size of a mobile phone, is either fixed directly to the elements of the vehicle by means of a screw or mounted with the use of the adapter 18 and the cradle 21. The proper holding unit and the replaceable inserts 13, precisely adjusted to the width and thickness of the holding unit, are selected from the set of holding units, as depicted in the Fig. 1, including four holding units of various width A and length B of the base 1 and height C of both side walls 2, which form one entirety with the base 1. The width A and the length B of the base, and the height C of the side walls are selected in such a way that four holding units 3, 4, 5, 6 in the set cover the range of dimensions of all used types of mobile phones.

The holding unit 3 is designed to accommodate mobile phones of relatively small width and high thickness. The holding unit 4 is designed to accommodate mobile phones of high width and high thickness. The holding unit 5 is designed to accommodate mobile phones of small width and small thickness. The holding unit 6 is designed to accommodate mobile phones of high width and small thickness.

Obviously, a full set of holding units may include more holding units than it is presented in the Fig. 1, however, it should cover a full range of width, length and thickness of mobile phones currently available on the market. In order to increase the versatility of the set, it may include, for example, from six to ten different holding units, which dimensions are suitable for mobile phones available on the market now and in the future.

The holding unit, as presented in the Figs. 2 to 5, is made of plastic, ABS favourably, and consists of a base 1 and the side walls 2, which form one entirety with the base and are approximately perpendicular to the base. In the bottom part of the holding unit the side walls are provided with bottom curved protrusions 7 to prevent the phone from falling out.

The base 1 of the holding unit is provided, on its rear surface, with an annular set of locating protrusions 8 (Fig. 4), which are adapted to engage with a corresponding set of cavities or holes on the front surface of the adapter 18 (fig. 8). The base 1 is also provided with holes 9 for mounting screws to fix the holding unit to the dashboard of the vehicle or to the adapter 18, which is then placed in the cradle 21. Once the proper holding unit is fixed, the lower hole 9 can be covered with a plug 28 bearing, e.g., a manufacturer's logo. Moreover, in the base 1 there are through holes 10, which are parallel to the side walls 2 of the holding unit and which length is slightly smaller than the length of the side walls, and into which the replaceable resilient inserts 13 (Fig. 7) are inserted.

The side walls 2 of the holding unit are provided, in its axial section, with an upper hooked catch 11, directed towards the axis of the holding unit, whereas on the inner surfaces of the side walls there are rectangular cavities 12, corresponding to the size and shape of the axial section of the replaceable inserts 13, which are additional accessories for the holder.

The replaceable inserts 13 are made of resilient material, favourably, of rubber; each of the said inserts 13 (Fig. 6 and 7) consists of a thin vertical wall 16, provided with stiffening ribs 17 in its rear part and with a hooked protrusion 15 at the top to prevent the mobile phone resting in the inserts 13 from falling out The inserts 13, in the bottom part, are provided with a horizontal protrusion 14 of thickness g and width d, which settings should make it possible to accommodate mobile phones of various width, depending on the width d of the horizontal protrusion 14, and of various thickness, depending on the thickness g of the horizontal protrusion 14.

The inserts 13 are mounted in the holding unit by slipping them from below into the through holes 10 in the base 1 of the holding unit.

The height h of the inserts depends on the height of the side walls 2 and is always smaller. Moreover, the height h and the length of the replaceable 13 are equal to the corresponding dimensions of the rectangular cavities 12, located on the inner surfaces of the side walls 2. This arrangement allows rigid mounting in the proper holding unit 3, 4, 5 or 6.

Application of the proper holding unit 3, 4, 5 or 6, selected from the set for a particular mobile phone, consists in adjusting the size of the holding unit to the size of the mobile phone through proper selection of the width A of the base and the height C of the side walls 2, depending on the width and thickness of the mobile phone, and then through selection of proper thickness g and width d of the horizontal protrusion 14 of the relevant replaceable inserts 13 depending on the dimensions of the phone. When the selected inserts 13 are placed in the through holes 10 of the selected holding unit, this holding unit 3, 4, 5 or 6 is fixed to the dashboard of the vehicle by means of screws, which are driven through the hole 9 in this holding unit, or - in case of the cradle 21 is used - to the adapter 18 through the hole 23 in this adapter.

The adapter 18 is and additional equipment of the mobile phone holder, according to the invention. The adapter 18 has a shape of a flat box of a small thickness, inside which there is an electronic module, e.g. Bluetooth. In its upper part, the adapter is equipped with a notch 19, into which the protrusion 20 of the cradle 21 (Fig. 8) enters, and with a protrusion 22 with an electrical multi-pin connection 26, the said protrusion is inserted into the bottom pocket of the cradle 21. Moreover, in its middle part, the adapter is favourably provided with annular set of locating protrusions 25, which is adapted to engage with a similar set of protrusions 8 on the rear surface of the holding unit 3, 4, 5 or 6.

In the upper part of the adapter 18 there is a transparent window 24, through which the LEDs indicating the operation of electronic modules, e.g. a Bluetooth module, is visible.

On its lateral surface the adapter 18 is provided with a set of sockets 27. Moreover, in the middle part of the adapter there is a hole 23, through which a mounting screw is driven and the axis of this hole should overlap with the axis of the upper hole 9 of the holding unit 3, 4, 5, 6, and also with the axis of the annular set of locating protrusions 25.

The holding unit 3, 4, 5, 6 can be mounted directly to the dashboard of the vehicle or placed in the cradle 21 after the adapter 18 is fixed.

The phone is locked in the holder by inserting it downwards into the space formed between the replaceable inserts 13, with the bottom edge of the holding unit resting on the curved protrusions 7 in the bottom part of the side walls 2. In order to lock a mobile phone of similar but slightly different dimensions in the holder, it is enough to replace the inserts 13 in the side walls 2 of the holding unit with inserts of width and thickness relevant to the width and thickness of the new mobile phone.

### References

- 1: base of the holding unit
- 2: side walls of the holding unit
- 3: holding unit for a mobile phone of small width and high thickness
- 4: holding unit for a mobile phone of high width and high thickness
- 5: holding unit for a mobile phone of small width and small thickness
- 6: holding unit for a mobile phone of high width and small thickness
- 7: curved protrusions in the bottom part of the holding unit
- 8: annular set of locating protrusions
- 9: holes for screws in the holding unit
- 10: through holes in the base 1 of the holding unit
- 11: top hooked catch of the side walls 2
- 12: cavities in the inner surface of the side walls 2
- 13: resilient replaceable insert
- 14: horizontal protrusion of the insert 13
- 15: upper hooked protrusion of the insert 13
- 16: thin wall of the insert 13
- 17: ribs on the rear surface of the wall 16
- 18: adapter
- 19: notch in the adapter 18
- 20: protrusion
- 21: cradle
- 22: lower protrusion of the adapter 18
- 23: hole for a screw in the adapter 18
- 24: transparent window of the adapter 18
- 25: annular set of locating protrusions
- 26: multi-pin connection
- 27: set of sockets
- 28: plug for the hole 9
- A: width of the base of the holding unit
- B: length of the base of the holding unit
- C: height of the side walls of the holding unit
- d: width of the horizontal protrusion 14 of the replaceable insert 13
- g: height of the horizontal protrusion 14 of the replaceable insert 13
- h: height of the thin wall 16 of the replaceable insert 13

## Claims

1. A universal mobile phone holder, especially for mechanical vehicles, with an adaptable part adjusting the holder to the size of the mobile phone, which is provided with a set of several holding units and a known cradle that is permanently fixed within a mechanical vehicle, each of the said holding units consisting of a base (1) and side walls (2) that form one entirety with the base (1) and are approximately perpendicular to the base (1), and are provided with top hooked catches (11) and bottom curved protrusions (7) to prevent the phone from falling out, **characterised in that** particular holding units (3, 4, 5, 6) are different from one another in terms of the width A of the base (1) and the height C of the side walls (2) but the ranges of width (A) and height (C) of all holding units in the set cover the range of widths and thicknesses of the mobile phones available on the market.

2. The holder according to the Claim 1, **characterised in that** the holding units (3, 4, 5, 6) are provided with a set of replaceable inserts (13) of various thickness (d) and height (g) of the horizontal protrusion (14) and the base (1) of each holding unit is provided with through holes (10), into which the replaceable inserts (13) can be inserted from below and mounted.

3. The holder according to the Claim 1 or the Claim 2, **characterised in that** the side walls (2) of the holding units (3, 4, 5, 6) are provided with cavities (12) on their inner surface, the size of which corresponds to the dimensions of the replaceable inserts (13).

4. The holder according to the Claim 2, **characterised in that** the replaceable inserts (13) are made of resilient material, favourably, of rubber.

5. The holder according to the Claim 2, or 3, or 4, **characterised in that** the replaceable inserts (13) consist of a vertical wall (16) inserted into the rectangular cavity (12) in the side walls (2) of the holding unit and of a horizontal protrusion (14), which width (d) and thickness (g) are adjusted to accommodate mobile phones of various width and thickness.

6. The holder according to any of the Claims 2 - 5, **characterised in that** the replaceable inserts (13) are provided with a hooked protrusion (15) at the top.

7. The holder according to any of the Claims 2 - 6, **characterised in that** the vertical wall (16) of the replaceable insert (13) is thin and is provided with stiffening ribs (17) in its rear part.

8. The holder according to the Claim 1, **characterised in that** its adaptable part is additionally provided with an adapter (18) that has a form of a flat thin box, inside which there is an electronic module, e.g. a Bluetooth module; the said adapter is mounted in a cradle (21) fixed to the body of a mechanical vehicle and is favourably connected with the holding unit (3, 4, 5, 6), placed on the adapter, by means of a screw.

9. The holder according to the Claim 8, **characterised in that** the adapter (18) is, in its upper part, provided with a notch (19), which is adapted to engage with the protrusion (20) in the cradle (21), and, in its lower part, the said adapter is provided with a protrusion (22), which is adapted to enter into the cavity in the lower part of the cradle (21), and also, in its middle part, the said adapter is provided with a hole (23), which is concentric with one of the holes (9) in the base (1) of the holding unit (3, 4, 5, 6).

10. The holder according to the Claim 8 or 9, **characterised in that** the adapter (18), in its upper part, is provided with a transparent window (24), under which there is a LED that is a part of the Bluetooth module and the said LED is adapted to indicate the operation of the Bluetooth module.

11. The holder according to the Claim 8 or 9, or 11, **characterised in that** the adapter (18), on its front surface, is provided with an annular set of locating protrusions (25), which are adapted to engage with a corresponding annular set of locating protrusions (8) on the rear surface of the holding unit (3, 4, 5, 6).

12. The holder according to any of the Claims 8 - 11, **characterised in that** the adapter (18), in its lower front part, is provided with a multi-pin connection (26), whereas on the side wall it is provided with a set of sockets (27) connected to the electronic module.

## Amended claims

### Amended claims in accordance with Rule 137(2) EPC.

**1.** A universal mobile phone holder, especially for mechanical vehicles, with an adaptable part adjusting the holder to the size of a mobile phone, which is provided with a set of several holding units (**3, 4, 5, 6**) and a known cradle (**21**) that is permanently fixed within a mechanical vehicle, each of the holding units (**3, 4, 5, 6**) is mounted in the cradle **(21)** by means of an adapter **(18)**, the holding unit (**3, 4, 5, 6**) consisting of a base **(1)** and side walls **(2)** that form a whole with the base **(1)** and are approximately perpendicular to the base **(1)**, the side walls **(2)** being further provided with top hooked catches **(11)** and bottom curved protrusions **(7)** to prevent the mobile phone from falling out, **characterised in that** the particular holding units (**3, 4, 5, 6**) of the set of holding unit are different from one another in terms of a width **(A)** of the base **(1)** and a height **(C)** of the side walls **(2),** but the range of the width **(A)** and the height **(C)** of all holding units (**3, 4, 5, 6**) in the set are adapted to the mobile phones of various width and thickness, wherein the adapter **(18)** is mounted in the cradle **(21)** and has a form of a flat box of a small thickness, inside which there is an electronic module, in particular a Bluetooth module, and furthermore, the holding unit **(3, 4, 5, 6)** is connected to the adapter **(18),** such as by a screw.

**2.** The holder according to Claim 1, **characterised in that** the holding units **(3, 4, 5, 6)** are provided with a set of replaceable inserts **(13)** of various thickness (d) and height (g) of a horizontal protrusion **(14),** and the base **(1)** of each holding unit **(3, 4, 5, 6)** is provided with through holes **(10),** into which the replaceable inserts (13) can be inserted from below and mounted.

**3.** The holder according to Claim 2, **characterised in that** the side walls **(2)** of the holding units **(3,4, 5, 6)** are provided with cavities **(12)** on their inner surface, the size of which corresponds to the dimensions of the replaceable inserts **(13).**

**4.** The holder according to Claim 2, **characterised in that** the replaceable inserts **(13)** are made of a resilient material, preferably rubber.

**5.** The holder according to any of the preceding Claims 2 - 4, **characterised in that** the replaceable inserts **(13)** consist of a vertical wall **(16)** inserted into the rectangular cavity **(12)** in the side walls **(2)** of the holding unit **(3, 4, 5, 6)** and of a horizontal protrusion **(14),** which width (d) and thickness (g) are adjusted to accommodate mobile phones of various width and thickness.

**6.** The holder according to any of the preceding Claims 2-5, **characterised in that** the replaceable inserts **(13)** are provided with a hooked protrusion **(15)** at the top.

**7.** The holder according to any of the preceding Claims 2-6, **characterised in that** the vertical wall **(16)** of the replaceable insert **(13)** is thin and is provided with stiffening ribs **(17)** in its rear part.

**8.** The holder according to Claim 1, **characterised in that** the adapter **(18)** is provided in its upper part with a notch **(19),** which is adapted to engage with a protrusion **(20)** in the cradle **(21),** in its lower part with a protrusion **(22),** which is adapted to enter into the cavity in the lower part of the cradle **(21),** and in its middle part with a hole **(23),** which is concentric with one of holes **(9)** in the base **(1)** of the holding unit **(3, 4, 5, 6).**

**9.** The holder according to Claim 1 or 8, **characterised in that** the adapter **(18)** is provided in its upper part with a transparent window **(24),** under which there is a LED that is a part of the electronic module, in particular the Bluetooth module, and adapted to indicate an operation of the Bluetooth module.

**10.** The holder according to Claim 1 or 8 or 9, **characterised in that** the adapter **(18)** is provided on its front surface with an annular set of locating protrusions **(25),** which are adapted to engage with a corresponding annular set of locating protrusions **(8)** on the rear surface of the holding unit **(3, 4, 5, 6).**

**11.** The holder according to any of the preceding Claims 1 or 8 - 10, **characterised in that** the adapter **(18)** is provided in its lower front part with a multi-pin connection **(26),** and on its side walls with a set of sockets **(27)** connected to the electronic module.
